Europäisches Patentamt

European Patent Office

Office européen des brevets

(11) Numéro de publication: **0 463 433 A1**

# DEMANDE DE BREVET EUROPEEN

(21) Numéro de dépôt: **91109380.5**

(22) Date de dépôt: **07.06.91**

(51) Int. Cl.5: **B23B 13/12**, B23B 31/20

(30) Priorité: **27.06.90 CH 2138/90**

(43) Date de publication de la demande:
**02.01.92 Bulletin  92/01**

(84) Etats contractants désignés:
**AT CH DE ES FR GB IT LI NL**

(71) Demandeur: **Neukomm S.A.**
**Rue des Gorges 45**
**CH-2738 Court(CH)**

(72) Inventeur: **Neukomm, Pascal**
**c/o Neukomm S.A., Rue des Gorges 45**
**CH-2738 Court(CH)**

(74) Mandataire: **Blum, Rudolf Emil Ernst et al**
**c/o E. Blum & Co Patentanwälte Vorderberg**
**11**
**CH-8044 Zürich(CH)**

(54) **Canon de guidage réglable pour tour à poupée mobile.**

(57) Le canon comporte une âme (1) entourée d'une douille (5), un déplacement axial relatif de ces pièces servant à modifier le diamètre intérieur de l'âme au moyen d'un serrage obtenu par action réciproque de deux surfaces coniques complémentaires (4,8) prévues sur ces pièces. Celles-ci sont montées dans un carter (7) par deux jeux de roulements (6, 27) leur permettant de tourner indépendamment. L'un des jeux est monté dans un piston (15) commandé hydrauliquement ou pneumatiquement (16, 17, 18, 19) pour modifier sa distance axiale avec l'autre. Ceci permet de modifier par une variation de pression la profondeur de l'engagement de la douille sur l'âme, et donc le diamètre intérieur de celle-ci, même quand ces pièces tournent.

Fig. 1

Il est connu d'utiliser, sur les tours automatiques dits à poupées mobiles, un canon de guidage permettant de guider librement, mais essentiellement sans jeu radial, la matière à usiner. Celle-ci se présente alors sous forme d'une barre dont la rotation et le positionnement axial sont assurés par la poupée. Si la barre à usiner est de section circulaire, le canon peut être fixe, mais il peut aussi être rotatif, soit pour diminuer la friction entre le canon et la barre, soit lorsque celle-ci n'est pas de section circulaire. Si le canon est rotatif, il peut soit tourner fou - en particulier pour les barres de fort diamètre - soit être entraîné par la poupée à la même vitesse que la barre à usiner. Dans les deux cas on parlera de canon tournant.

Pour un travail de précision ou à grande vitesse, le canon a souvent une forme générale ressemblant beaucoup à une pince de serrage conventionnelle entourée d'une douille servant non à serrer la barre à usiner, mais à ajuster le diamètre intérieur de la pince pour qu'elle guide la barre à usiner avec la plus grande précision possible. Sur certains modèles perfectionnés, cet ajustage est réglable avec une grande précision au moyen d'un système à écrou pour tenir compte d'une variation du diamètre de la barre à l'intérieur de ses tolérances, ainsi que de l'usure du canon. Toutefois cet ajustage nécessite un arrêt indésirable du tour. Sur d'autres modèles, la pince formant l'âme du canon est constamment serrée par l'action d'un ressort, ce qui permet une forte pression de l'outil sur la barre, par exemple pour le moletage. Ce système ne permet toutefois pas un guidage sans serrage de la barre, tel qu'il est désirable lors du ravitaillement ou de l'éjection d'une pièce usinée ou d'une chute. De plus, toute modification ou ajustement de la pression de serrage exige un arrêt du tour, toujours préjudiciable aux cadences rapides.

L'invention vise à fournir un canon réglable sans arrêter le tour et de manière facilement réalisable au moyen d'une unité à commande numérique, ce canon étant capable aussi bien de guider la barre avec un jeu minimal, par exemple pour son éjection, que de la serrer faiblement pour un usinage de précision, ou encore de la serrer fortement lorsqu'elle est soumise à de grandes pressions, par exemple lors du moletage, lorsqu'une avance n'est pas nécessaire.

A cet effet, l'invention est définie comme il est dit à la revendication 1.

Cet agencement présente toute une série d'avantages. En effet, il permet de régler le degré de serrage du canon de façon simple et précise par variation de la pression dans un circuit hydraulique ou pneumatique, sans arrêter le tour. Le réglage de la pression peut de préférence être commandé par un circuit de commande numérique, et peut en particulier prévoir les trois modes distincts suivants de fonctionnement du canon. Un mode ouvert permettant un léger jeu (par exemple de quelques dixièmes de mm) de la barre à usiner dans le canon et qui sera utilisé lors de l'injection de la barre dans le canon ainsi que lors de son éjection de celui-ci. Un mode de guidage où la pression est réglée de manière à ce que le canon enserre légèrement la barre et guide celle-ci avec une très grande précision pour l'usinage avec avance de la barre, et enfin un mode serré, où la pression est réglée de façon à obtenir une immobilisation de la barre en direction axiale. Ce dernier mode de fonctionnement peut servir pour des usinages sans avance et exigeant une forte pression de l'outil, tel le moletage, mais il peut aussi servir avantageusement pour d'autres opérations tel par exemple le ravitaillement dit "double". Celui-ci est utilisé lorsque la pièce doit être usinée sur une grande longueur, et consiste à la faire avancer en cours d'usinage au moyen de la poupée après avoir fait reculer celle-ci sans mouvement axial de la pièce, afin d'obtenir une course de la poupée suffisamment longue pour l'avance désirée de la pièce. Le mode serré mentionné plus haut permet évidemment une immobilisation simple et très précise de la barre pendant le recul de la poupée, puis son relâchement lors de l'avance subséquente de cette dernière.

On notera que les diverses pressions exercées par l'âme du canon sur la barre peuvent toutes être obtenues soit directement par une pression hydraulique ou pneumatique dans le vérin, soit par la force d'un ou de plusieurs ressorts de rappel agissant en sens opposé à la pression hydraulique ou pneumatique dans le vérin.

L'invention sera maintenant illustrée plus en détail par la description d'un mode de réalisation et à l'aide du dessin, dans lequel

la figure 1 schématise une vue en coupe simplifiée d'une forme d'exécution de l'invention,

la figure 2 représente une coupe composite - en deux positions distinctes de l'âme du canon - et plus détaillée d'une forme d'exécution semblable à celle de la figure 1.

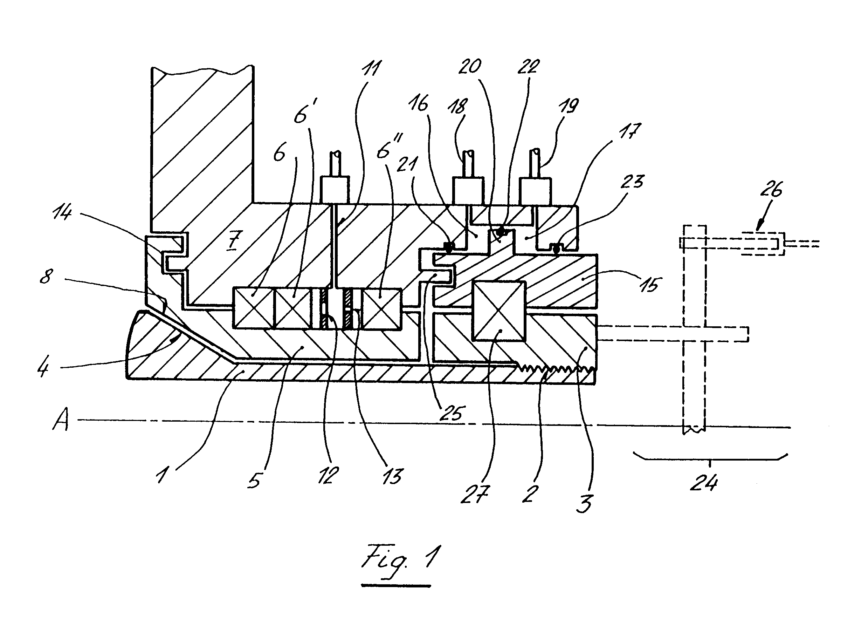

Dans la figure 1 le chiffre 1 désigne une pièce formant l'âme du canon et qui ressemble beaucoup à une pince de serrage conventionnelle. Sa forme extérieure est essentiellement à symétrie de rotation autour de l'axe A du dessin qui est également l'axe de rotation du canon, et sa section intérieure est adaptée à la section de la barre à usiner (non montrée au dessin) qu'elle doit guider. Dans ce qui suit on supposera celle-ci circulaire pour simplifier la description, bien que cela ne soit pas nécessaire. L'extrémité postérieure de l'âme 1 porte un pas de vis 2 pour sa fixation dans un culot fileté 3, tandis que son extrémité antérieure comporte plusieurs fentes longitudinales ou hélicoïdales (non montrées au dessin) ainsi qu'une surface conique 4 similaire à celle d'une pince de serrage. La partie antérieure de l'âme est maintenue dans une douille rotative 5 montée par l'intermédiaire de trois roulements à billes 6, 6', 6'' dans un carter fixe 7 et présentant à son extrémité antérieure une surface conique interne 8 complémentaire de la surface 4 de l'âme. La fonction des roulements 6, 6', 6'' est de laisser la douille 5 tourner fou dans le carter tout en l'immobilisant en direction axiale (c'est-à-dire parallèlement à l'axe A), et il est à remarquer que ces roulements peuvent être remplacés par un nombre quelconque de roulements à billes, à aiguilles, à galets coniques, etc., ou même par des paliers lisses permettant une rotation de la douille 5 tout en limitant son déplacement axial.

Dans le mode de réalisation de la figure 1, les roulements 6, 6' et 6'' sont lubrifiés par l'injection d'un lubrifiant en fines gouttelettes à travers un canal 11 et à travers deux diaphragmes munis d'ajours 12 et 13. Un labyrinthe 14 évite la sortie intempestive du lubrifiant, et les ajours 12 et 13 ont des diamètres différents choisi de manière à obtenir une répartition optimale du lubrifiant en fonction du nombre de roulements de part et d'autre des diaphragmes, de la pression qui règne dans ces roulements, etc.

Le culot fileté 3 dans lequel est vissée l'âme 1 est porté par un roulement 27 monté à l'intérieur d'un piston à double action 15. La fonction du roulement 16 est similaire à celle des roulements 6, 6' et 6'', c'est-à-dire qu'il doit permettre une libre rotation du culot 3, et donc de l'âme 1 vissée dans ce dernier, par rapport au piston 15, tout en limitant ou en empêchant un déplacement axial relatif de ces pièces afin que le piston 15 puisse agir sur la position longitudinale de l'âme 1 du canon sans empêcher sa rotation. Comme dans le cas des roulements 6, 6', 6'', toute combinaison de roulement et/ou de paliers remplissant ces fonctions peut être utilisée à cet effet, et le roulement à billes 27 montré au dessin ne représente qu'une solution particulièrement simple choisie à titre d'exemple.

Le piston 15 est une pièce annulaire, essentiellement à symétrie de rotation autour de l'axe A et dont une excroissance radiale 20 forme un piston à double effet logé dans une cavité cylindrique du carter 7. Ce piston peut exercer une force dans l'une ou l'autre direction axiale, en fonction de la surpression existant dans une des chambres annulaires 16 ou 17 par rapport à l'autre. Chacune de ces chambres est reliée par une conduite 18, 19 à un circuit hydraulique ou pneumatique (non représenté) de type connu, agencé pour produire les pressions nécessaires. De préférence, ce circuit sera commandé par un circuit électronique à commande numérique.

Des joints (du type dit "O-ring") 21, 22, 23 placés dans des rainures correspondantes du piston, respectivement du carter, assurent l'étanchéité des chambres 16 et 17. On voit facilement que selon les pressions transmises par les conduites 18, 19 aux chambres 16 et 17, l'ensemble formé par le piston 15, le roulement 27 et le culot 3 ainsi que l'âme 2 vissée dans celui-ci sera poussé soit vers la gauche soit vers la droite, cependant que la douille 5 reste immobilisée en direction axiale par les roulements 6. Dans le premier cas la partie antérieure de l'âme 1 est dégagée de la surface conique 8 de la douille 5, ce qui agrandit légèrement les dimensions intérieures de la partie antérieure de l'âme et libère la barre à usiner (non représentée) engagée dans celles-ci. Dans le second cas la surface conique de l'âme sera tirée vers l'intérieur de la douille, ce qui conduit l'âme à enserrer plus ou moins fortement la barre placée à son intérieur en fonction des pressions appliquées par le circuit hydraulique ou pneumatique aux chambres 16 et 17.

Le chiffre de référence 24 désigne un ensemble de pièces esquissées en traits tirés et représentant un dispositif de transmission mécanique de type connu pour transmettre à l'âme du canon la rotation impartie par la poupée (non représentée) du tour à la barre. Cette transmission a pour but principal d'éviter une friction excessive entre l'âme du canon et la barre, en particulier lorsque cette dernière est de petit diamètre. Les éléments de ce dispositif d'entraînement sont connus dans le métier et n'ont donc pas besoin d'être décrits ici. On notera toutefois qu'ils doivent comprendre des éléments télescopiques ou similaires, tel celui esquissé en 26, permettant un certain mouvement axial relatif entre le culot 3 et la poupée sans nuire à l'entraînement du culot 3 par la poupée.

La symétrie de rotation du piston 15 autour de l'axe A permet en principe à celui-ci d'être partiellement entraîné en rotation par le culot 3 au cours du temps. Pour éviter le cas échéant une telle rotation, on peut prévoir un plot tel celui désigné par le chiffre 25 et engagé dans une cavité correspondante du piston, ou bien un ou plusieurs organes similaires.

Bien que les chambres annulaires 16 et 17 délimitées par le piston 15 représentent une solution particulièrement simple et symétrique pour commander hydrauliquement la position axiale de l'âme du canon, d'autres agencements peuvent être envisagés, tel par exemple un ensemble de trois pistons distincts ayant des chambres cylindriques séparées par 120° autour de l'axe A.

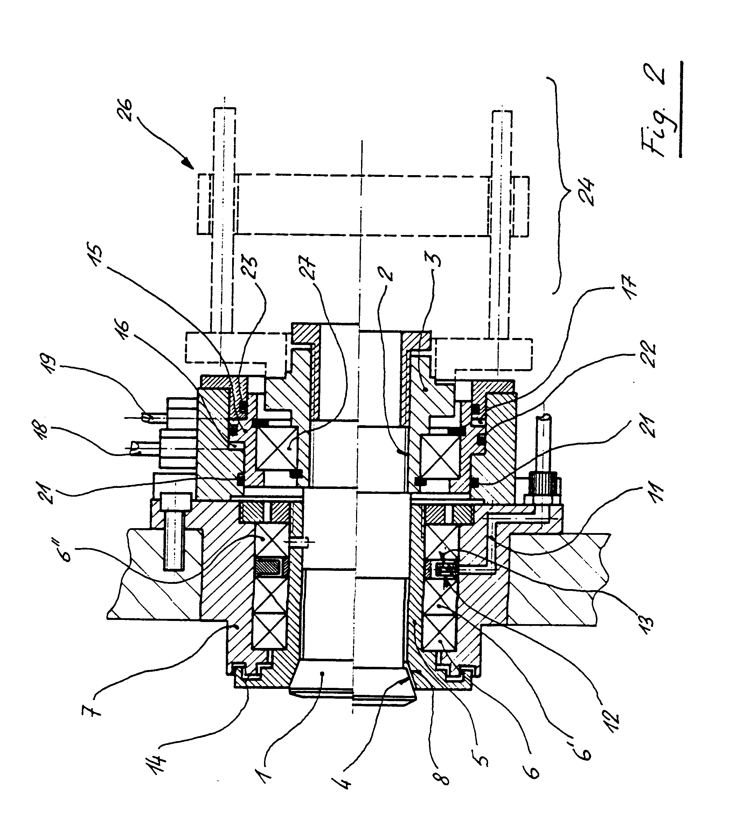

On remarquera également que la figure schématique 1 n'explicite pas certains détails aussi nécessaires qu'évidents pour l'homme du métier, tels par exemple l'existence d'un couvercle démontable à l'extrémité droite du carter, pour engager le piston dans celui-ci lors du montage. C'est pourquoi la figure 2, dans laquelle les éléments correspondant à ceux de la figure 1 sont identifiés par les mêmes chiffres que dans celle-ci, montre plus en détail un exemple de réalisation de l'invention. Cette figure explicite en particulier deux positions distinctes de l'âme 1 du canon par rapport à la douille 5. Dans la moitié supérieure de la figure 2, l'âme est serrée dans la douille par une surpression dans la chambre 16, tandis que dans la moitié inférieure de cette figure l'âme 1 est poussée vers la gauche par une surpression dans la chambre 17, et son extrémité gauche est donc libérée de la douille 5.

**Revendications**

1. Canon de guidage réglable par déplacement axial de l'âme du canon par rapport à une douille qui l'entoure, pour tour automatique à poupée mobile, caractérisé en ce qu'il comprend au moins un vérin hydraulique ou pneumatique avec au moins un cylindre et un piston commandant par l'intermédiaire d'au moins un roulement ou palier chacun, les positions axiales relatives de l'âme et de la douille du canon.

2. Canon selon la revendication 1, caractérisé en ce que le vérin est un vérin à double effet comportant au moins un piston et deux chambres antagonistes situées axialement de part et d'autre de ce piston.

3. Canon selon la revendication 1, caractérisé en ce que le vérin comporte au moins une chambre, et que la pression à l'intérieur de celle-ci agit contre la force d'au moins un ressort de rappel.

4. Canon selon une des revendications 1 à 3, caractérisé en ce que le vérin comporte un piston annulaire, coaxial avec le canon.

5. Canon selon une des revendications 1 à 3, caractérisé en ce que le vérin comporte plusieurs pistons cylindriques équirépartis autour de l'axe de rotation du canon.

6. Canon selon la revendication 4, caractérisé en ce que le piston est solidaire en direction axiale avec l'âme du canon.

7. Canon selon une des revendications précédentes, caractérisé en ce que sa douille tourne fou.

8. Canon selon une des revendications précédentes, caractérisé en ce que son âme est entraînée en rotation par la poupée.

9. Canon selon une des revendications 1 à 7, caractérisé en ce que son âme tourne fou.

10. Canon selon une des revendications précédentes, caractérisé en ce que le maintien en direction axiale de l'âme et/ou de la douille est assuré par au moins un roulement à galets coniques.

11. Canon selon une des revendications précédentes, caractérisé en ce que plusieurs roulements ou paliers sont alimentés par une même source de lubrifiant sous pression, et qu'au moins deux ajutages avec des sections passantes différentes sont intercalés entre la source et au moins deux roulements ou paliers distincts.

12. Canon selon une des revendications précédentes, caractérisé par un dispositif de mise sous pression d'un fluide hydraulique ou pneumatique connecté au vérin et commandé par une unité de commande numérique pour régler la pression du fluide dans au moins une chambre du vérin.

13. Canon selon la revendication 12, caractérisé en ce que l'unité de commande est agencée pour régler la pression du fluide à trois valeurs distinctes prédéterminées.

Fig. 1

Fig. 2

Office européen
des brevets

**RAPPORT DE RECHERCHE
EUROPEENNE**

Numéro de la demande

**EP 91 10 9380**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. CI.5) |
|---|---|---|---|
| X | WO-A-8 701 318   (JENS) <br> * page 9, ligne 1 - ligne 14; figure 4 * * page 11, ligne 11 - page 12, ligne 16; figure 6 * <br> – – – | 1,2,4,6,7 | B 23 B 13/12 <br> B 23 B 31/20 |
| X | CH-A-4 085 91   (WUILLAUME) <br> * page 1, ligne 41 - page 2, ligne 13; figures 1,2 * <br> – – – | 1,3,4,6,8 | |
| X | US-A-4 258 598   (HOFFMANN) <br> * colonne 2, ligne 66 - colonne 5, ligne 2; figures 2-4 * <br> – – – | 1,3,4,7 | |
| A | DE-A-3 532 004   (JENS) <br> * colonne 3, ligne 66 - colonne 4, ligne 3; figure 2 * <br> – – – – – | 11 | |

**DOMAINES TECHNIQUES
RECHERCHES (Int. CI.5)**

B 23 B

Le présent rapport de recherche a été établi pour toutes les revendications

| Lieu de la recherche | Date d'achèvement de la recherche | Examinateur |
|---|---|---|
| La Haye | 11 octobre 91 | BOGAERT F.L. |

CATEGORIE DES DOCUMENTS CITES
X : particulièrement pertinent à lui seul
Y : particulièrement pertinent en combinaison avec un
     autre document de la même catégorie
A : arrière-plan technologique
O : divulgation non-écrite
P : document intercalaire
T : théorie ou principe à la base de l'invention

E : document de brevet antérieur, mais publié à la
     date de dépôt ou après cette date
D : cité dans la demande
L : cité pour d'autres raisons
................................................................................
& : membre de la même famille, document
     correspondant